(19) **Europäisches Patentamt**
**European Patent Office**
**Office européen des brevets**

(11) **EP 4 651 103 B1**

(12) **EUROPEAN PATENT SPECIFICATION**

(45) Date of publication and mention
of the grant of the patent:
**11.02.2026 Bulletin 2026/07**

(51) International Patent Classification (IPC):
***G06V 20/58*** *(2022.01)*

(21) Application number: **24176296.2**

(52) Cooperative Patent Classification (CPC):
**G06V 20/584**

(22) Date of filing: **16.05.2024**

(54) **ADAPTIVE IMAGE THRESHOLDING FOR LIGHT SOURCE IDENTIFICATION**

ADAPTIVE BILDSCHWELLEN FÜR LICHTQUELLENIDENTIFIKATION

SEUILLAGE ADAPTATIF D'IMAGE POUR IDENTIFICATION DE SOURCE LUMINEUSE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**19.11.2025 Bulletin 2025/47**

(73) Proprietor: **Aptiv Technologies AG**
**8200 Schaffhausen (CH)**

(72) Inventors:
• **GOPINATH, Vaishnavi**
**8200 Schaffhausen (CH)**
• **FRIEDRICHS, Klaus**
**8200 Schaffhausen (CH)**

(74) Representative: **Lewis Silkin LLP**
**Arbor**
**255 Blackfriars Road**
**London SE1 9AX (GB)**

(56) References cited:
• **CHOI YEONGYU ET AL: "Efficient local adaptive thresholding for night-time vehicle candidate detection", INTERNATIONAL JOURNAL OF COMPUTATIONAL VISION AND ROBOTICS, vol. 7, no. 5, 1 January 2017 (2017-01-01), pages 574, XP093215946, ISSN: 1752-9131, DOI: 10.1504/IJCVR.2017.086286**

• **MOON JIYONG ET AL: "Robust visual detection of brake-lights in front for commercialized dashboard camera", PLOS ONE, vol. 18, no. 8, 11 August 2023 (2023-08-11), US, pages e0289700, XP093215987, ISSN: 1932-6203, DOI: 10.1371/ journal.pone.0289700**

• **PATTANAYAK ABANIKANTA ET AL: "Dark image enhancement using adaptive piece-wise sigmoid gamma correction (APSGC) in presence of optical sources", MULTIMEDIA TOOLS AND APPLICATIONS., vol. 83, no. 1, 12 May 2023 (2023-05-12), US, pages 2289 - 2322, XP093215988, ISSN: 1380-7501, Retrieved from the Internet <URL:https://link.springer.com/ article/10.1007/s11042-023-15615-3/fulltext.html> [retrieved on 20241017], DOI: 10.1007/ s11042-023-15615-3**

**Description**

**Field**

The present disclosure relates to identification of a light source in an image. The present disclosure concerns use of a non-linear image transformation to determine light source identification thresholds for the image. The present disclosure concerns particularly, but not exclusively, detection of vehicle lights.

**Background**

A system that detects vehicle lights can be used to alert a driver to the presence of other vehicles, helping to prevent collisions and other accidents. Such a system can also be used to improve the switching and directionality of adaptive beam control to avoid blinding the driver of another vehicle, for example by automatically turning off high beam headlights, or adjusting illumination areas of light emitting diode matrix-based vehicle lights to control the beam angle.

If there are inaccuracies in the detection of lights of other vehicles, high beams may be turned off even when there is no other vehicle present. Such inaccuracies may arise as a result of tone mapping operations typically used in image processing performed by vehicle camera systems. Tone mapping is a pre-processing technique based on a non-linear transformation performed by an image signal processor to reduce the dynamic range of an image, saving computational resources for storage and processing. However, while important visual details are preserved during tone mapping, real-world or scene brightness information is lost. For example, image signal processors typically used in automotive contexts compress raw images to 8-bit images for storage, in which scene brightness information is mapped to 8-bit pixel brightness values.

The change in dynamic range which results from such compression is such that illuminated regions of the image which are not light sources, such as reflectors, lane markings, and other bright non-luminant objects may have pixel intensities comparable to those of light sources, and present as false positives in a light source identification process. In some cases, such illuminated regions may have higher intensities than those associated with true light sources, particularly if the light sources are distant, and distant light sources go undetected, particularly if a global light source detection threshold is applied to the image.

*"Efficient local adaptive thresholding for night-time vehicle candidate detection"* by Choi Yeongyu et al, International Journal or Computational Vision and Robotics, discloses an intelligent headlight control system using local adaptive thresholding.

The embodiments set out in the present disclosure present a technique which aims to improve the accuracy of identification of a light source in a tone mapped image. Particularly, a non-linear image transformation is used to apply light source identification thresholds to the image. In effect, the non-linear image transformation is such that light source detection is performed in a colour space approximating that of the real world, rather than that colour space of the compressed image. Embodiments set out in the present disclosure have applicability to identification of any type of light source, without restriction to vehicle light sources, and without restriction to any resolution of image.

**Summary**

According to a first aspect, there is provided a method of identifying a light source in an image, comprising receiving an image pyramid representing a tone mapped image by a reference pixel array of low resolution, and by one or more test pixel arrays of higher resolution than the reference pixel array, comparing pixel values of test pixels in the image with respective brightness thresholds, wherein a light source is identified at a position at which a test pixel value exceeds a respective brightness threshold, wherein for each test pixel, the method comprises defining the respective brightness threshold as a non-linear function of a pixel value of a reference pixel in the reference pixel array which has an area in the image which includes the position of the test pixel, and which has a pixel value which is the mean pixel value of the text pixels in the area in the image of the reference pixel, wherein the non-linear function is of the form $T(x,y) = A * (I''(x,y)/A)^\gamma + \beta$, for threshold value $T$ at test pixel image position $(x,y)$, reference pixel value $I''(x,y)$, maximum pixel value $A$, gamma correction coefficient $\gamma$, and linear offset $\beta$.

In this way, robust adaptive thresholding is employed such that light sources can be identified accurately, based on real-world brightness, from a tone mapped image produced by a camera system. It is not necessary for a raw image to be used, the required information can be derived from a compressed image.

In this way, it is possible to decode apparent scene brightness information from images by employing a modified gamma correction technique that acts as the inverse of tone mapping.

Since the lighting conditions, contrasts, or textures vary across the image, incorporating pixel neighbourhood information increases the effectiveness of thresholding.

In embodiments, the method further comprises identifying one or more regions of interest in the one or more test pixel arrays at which light sources are likelier to be present than a minimum probability threshold, wherein comparing pixel values comprises comparing pixel values of test pixels in the one or more regions of interest with respective brightness thresholds.

In embodiments, the method comprises identifying the one or more regions of interest using statistical analysis of a training dataset comprising information identifying one or more light sources in one or more historical images.

In this way, it is possible to ensure that areas of an image, in which it is unlikely that a light source will be identified, are not processed unnecessarily.

In embodiments, the method comprises classifying the regions of interest into at least two levels of likelihood of presence of a light source, wherein, for a region of interest of a higher likelihood level, the method comprises comparing the pixel values of a higher resolution test pixel array with respective thresholds, and for a region of interest of a lower likelihood level, the method comprises comparing the test pixel values of a lower resolution test array with respective thresholds.

In this way, computational efficiency is ensured by examining regions of interest at a high resolution only if light sources are likely to be present.

In embodiments, $\beta$ is a function of colour information of the test pixel and the colour information is chrominance information, wherein the function of the chrominance information is dependent upon the colour of a light source to be detected.

In this way, it is possible to distinguish red vehicle taillights and blueish-white vehicle headlights from other apparent bright regions in the image.

In embodiments, $\beta$ is a function of likelihood level of the region of interest of the test pixel, the likelihood is the probability that a detection is a light source.

In this way, it is possible to vary $\beta$ dynamically such that the strictness or aggression in thresholding can be controlled based on image and dataset properties.

In embodiments, $\gamma$ is a function of at least one of exposure of the image, and identification of one or more light sources in historical images.

In this way, it is possible to vary $\gamma$ dynamically such that the obtained thresholds are the converse of actual scene brightness at the time of scene capture.

In embodiments, the light source is a vehicle light source. In such contexts, accurate identification of a vehicle light source improves road safety and optimises high beam control, improving visibility for a driver, and reducing the risk of accidents caused by sudden changes in headlight brightness.

According to a second aspect, there is provided a computer program which, when executed by one or more processors, is arranged to cause the above method to be performed.

According to a third aspect, there is provided an apparatus comprising one or more processors arranged to execute the above computer program.

According to a fourth aspect, there is provided an automotive controller comprising the above apparatus.

According to a fifth aspect, there is provided a system comprising the above automotive controller and one or more cameras for capturing an image and generating the image pyramid from the captured image.

The invention is set out in the appended claims.

## Brief Description of Drawings

Illustrative embodiments will now be described with reference to the drawings in which:

Figure 1 illustrates the configuration of the stages of operation of a light source identification method according to a first embodiment;

Figure 2 shows the relationship between pixel values in pixel arrays at different levels of an image pyramid used in the method of the first embodiment;

Figure 3 shows an example of statistical analysis of historical vehicle light source identification results;

Figure 4 shows the configuration of regions of interest of an image plane derived using the statistical analysis of Figure 3; and

Figure 5 shows the relationship between factors which may be considered for dynamic calculation and adaptation of image threshold coefficients in embodiments of the present disclosure.

## Detailed Description

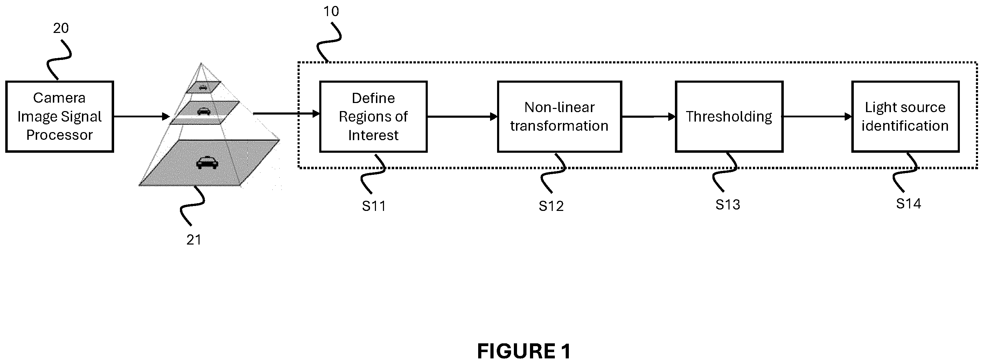

Figure 1 illustrates the configuration of the stages of operation of a light source identification method 10 according to a first embodiment. The method 10 is applied to an image received from an image capture source, such as a camera, and operates to identify the presence of one or more light sources in the scene represented by the captured image. The first embodiment is described in the context of identification of high-beam vehicle lights in an image received from an automotive camera system, captured in low-light or night-time driving conditions in which high-beam vehicle lights should be switched on. It will, however, be appreciated that this is simply by way of example, with the operating principles applicable to identification of other types of light source from images captured by other types of camera.

The image which is received is has been compressed by an image signal processor 20 of the camera based on a tone mapping operation. Tone mapping is well understood by those skilled in image processing, and details are not reproduced here in the interests of conciseness. Of significance to the first embodiment is the construction of an image pyramid 21 by the image signal processor 20 for the tone mapping operation. The image pyramid 21 is a multi-scale representation of an image, in which the image is represented at a series of different resolutions. Each level of the pyramid 21 is typically created by iterative Gaussian-like smoothing and downsampling of a higher-resolution level of the pyramid 21, with a corresponding scaling factor between consecutive levels.

The method 10 of the first embodiment is based on comparing S13 pixel values of the received image with thresholds, and identifying S14 a light source in the image at a position in the image at which a pixel value exceeds a light source identification threshold. Having identified a light source, any of a number of subsequent operations may be performed, such as alerting a user to the presence of a light source and controlling switching, or adjusting brightness and direction, of a vehicle's headlights as part of an adaptive beam control system. Further, an annotation may be applied to the image to indicate the location of an identified light source to enable statistical analysis of historical data. Such subsequent operations need not be part of the light source identification method 10 of the first embodiment, but form part of further embodiments in which the functionality of the first embodiment is extended in this manner.

In the first embodiment, preliminary operations are performed in order to configure the thresholding step. Such preliminary operations include the definition S11 of regions of interest of the received image, and the use of a non-linear transformation S12 to define the thresholds required to identify light sources in the regions of interest, based on a perception of scene brightness, rather than the brightness information represented in the compressed image. Such steps are defined in more detail below.

The image received from the image processor 20 of the camera is a two-dimensional pixel array $I(x,y)$, containing pixel brightness values $I$ at each position $(x,y)$. The first embodiment is described in relation to receipt of an 8-bit image, in which pixel brightness values range from 0 to 255. The principle of operation of the first embodiment can, however, be adapted to any other resolution. Pixel values exhibit higher intensity in regions corresponding to light sources, and the thresholding operation S13 acts to binarize the 8-bit image to generate a positive light source identification result at pixel positions at which the pixel value exceeds the threshold, and a negative result at pixel positions at which the pixel value does not meet the threshold.

In step S12, a threshold $T(x,y)$ is calculated for each pixel position. As such, the first embodiment contrasts with the use of a single global threshold applied across the entire image, and in this way, a dynamic, adaptive thresholding technique is enabled. A further advantage arises in the light source identification method 10 of the first embodiment by ensuring that the gamma correction-based thresholding is not dependent only on a single image pixel value, but is also based on a group of neighbouring pixels. For example, lighting conditions, contrasts or textures vary across an image, such that thresholding which is based only on an individual pixel may be less effective than context-aware systems of the present disclosure in which the effect of such variations is taken into account.

As such, in the first embodiment, the threshold $T(x,y)$ which is calculated for each pixel position is based on pixel values of a window of pixels, of a predetermined size, which contains the test pixel at position $(x,y)$. The pixel values of the window of pixels may be combined in order to determine the mean pixel value of the window, but other weighted combinations of pixels in the window may be used in alternative embodiments.

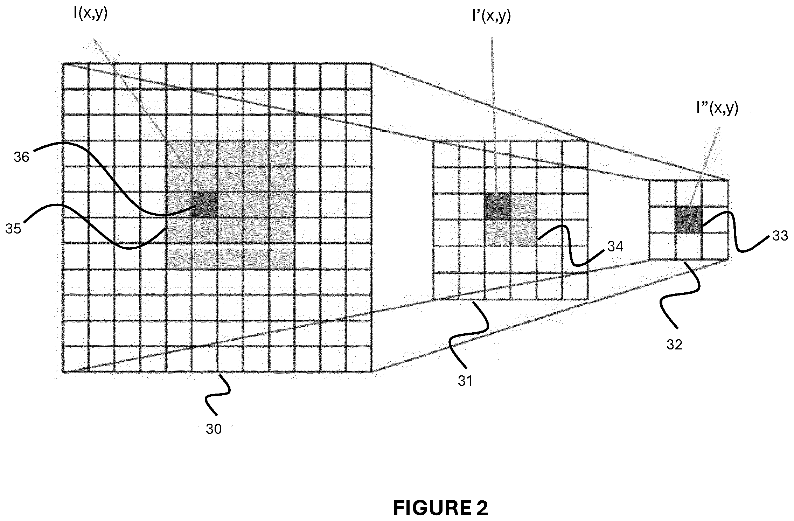

In embodiments in which the mean pixel value is used, the image pyramid 21 is particularly advantageous as a single pixel in a lower-resolution or 'reference' level of the pyramid 21 may already correspond to a mean of pixels at the same position of the image at a higher-resolution level, or 'test' level of the pyramid 21. This is illustrated with reference to Figure 2, which shows the relationship between pixel values of three different levels 30, 31, 32 of the pyramid 21, specifically a high-resolution test pixel array 30 at the base of the pyramid 21, and two lower-resolution reference pixel arrays 31, 32 at higher levels (closer to the apex) of the pyramid 21.

As such, it is possible to derive a pixel value from a reference pixel array, at a position in the image which includes the position in the image of the test pixel 36, and such a reference pixel value is referred to herein using the notation $I''(x,y)$. The reference pixel value may be taken from a level 31 of the pyramid adjacent to the level 30 of the test level containing the test pixel array, but this is not essential, depending on the size of the window to be averaged. As seen in Figure 2, for example, $I''(x,y)$ is illustrated as a reference pixel array 32 which is two levels above the test pixel array 30. A reference pixel 33 in pixel array 32 has a size which corresponds to the light-shaded area 34 in reference pixel array 31, and light-shaded area 35 in the test pixel array 30. The scaling factors between levels of the pyramid is such that reference pixel 33 corresponds to an area 34 spanned by four pixels in reference pixel array 31, one pixel of which (dark-shaded) corresponds to a position of the image of the test pixel 36 in the test array 30. An area 35, corresponding to the position of areas 33 and 34 is spanned by 25 pixels in test pixel array 30, one of which is the test pixel 36. Reference pixel 33 corresponds to the average of the pixel values contained within area 35.

For an 8-bit image, the thresholds are calculated according to Expression (1):

$$T(x,y) = 255 * (I''(x,y)/255)^{\gamma} + \beta \qquad \text{Expression (1)}$$

$\gamma$ is a non-linear coefficient with exponential influence on the thresholding process. $\beta$ is a linear coefficient. Expression (1) is referred to in the present disclosure as modified or extended form of gamma correction, gamma correction being a well-known image processing method used for contrast enhancement. The thresholds of expression (1) vary non-linearly across the image, and reverse the effect of the tone mapping of the image processor of the camera capturing the image, which maps scene brightness information to the pixel values of the image, in comparison to application of a global threshold. The modification or extension refers to the addition of the linear coefficient, $\beta$, and the incorporation of neighbourhood information in I''(x,y).

With the value of $\gamma$ below 1, and $\beta$ below 0, expression (1) ensures that calculated threshold values of the darker pixels are rendered brighter by a greater extent, while the already bright pixels are rendered slightly darker. Hence the thresholds have a low contrast when compared to the image pixels and are obtained by selectively varying the brightness of the original pixel value. In this sense, the thresholds can be considered as dynamic.

If $\beta$ is high, threshold values T(x,y) are also high, such that the thresholding is aggressive, leading to more granular binarization (smaller clusters of test pixels which exceed a threshold) and reducing false positives. Potentially, false negatives are increased, in which bright areas of the image are missed, if $\beta$ is too high. If $\beta$ is low, the thresholding is relaxed, leading to larger regions or clusters of test pixels which exceed a threshold, and there is lower risk of failing to detect a bright area of an image, but the number of false positives is increased if $\beta$ is too low. Consequently, the selection of optimal $\beta$ values has a strong effect on performance. Instead of a fixed value, configuring $\beta$ as a function of the pixel position, as well as colour properties, is used to advantageous effect in the first embodiment. $\beta$ can thus be considered as a local linear coefficient.

Similarly, if $\gamma$ is set too high, the risk of false positives is increased, whereas a low $\gamma$ may result in false negatives. In the first embodiment, having $\gamma$ configurable for each image, or for a group of images or frames, is used to advantageous effect. In particular, highly illuminated or over-exposed images yield better detections, with fewer false positives, when a small value of $\gamma$ is used. Under-exposed, or low-illumination images, which generally have a high contrast, yield better detections, with fewer false negatives, with a high value of $\gamma$. Thus, in the first embodiment, $\gamma$ is made a function of a suitable exposure metric of the image, leading to dynamic thresholding, which adapts to changing illumination conditions. $\gamma$ can thus be considered as a global non-linear coefficient.

In addition to appropriate configuration of $\gamma$ and $\beta$, further optimisation of the method of light source identification is achieved in the first embodiment by identifying S11 regions of interest of the image, which are regions in which one or more light sources can be expected to have a certain likelihood of being present. In this way, unnecessary processing of regions of an image which have a low likelihood of containing a light source can be avoided, which saves computational resources.

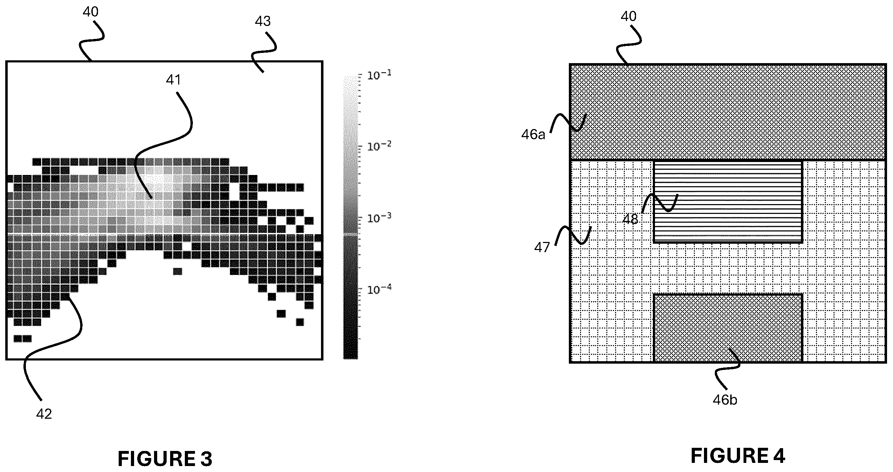

In the context of identifying vehicle light sources, statistical analysis is applied to datasets containing information identifying the presence and position of light sources in historical images taken in low-light conditions, in order to assess the likelihood of the presence of a light source in a new image. Figure 3 illustrates an example of the results of such statistical analysis in the form of a probability map or heat map across the image plane 40, with regions 41 of high probability shown lighter than regions 42 of low probability. From this, it is observed that the spatial distribution of vehicle lights in an image plane 40 is concentrated around the vanishing point close to region 41. The vehicle lights that appear in this region 41 are generally distant from the camera, and hence small in size. Consequently, there is a need to examine these areas closely to not miss any light sources from being detected during thresholding. On the contrary, vehicle lights which are closer to the camera will appear larger, and it may be computationally efficient to examine these at a lower resolution. In general, the size of vehicle lights tends to decrease radially inwards towards the vanishing point.

It is also observed that there are regions 43 of the image plane 40 at which no historical identification of light sources has occurred, suggesting that it is reasonable to infer that there is no possibility of identifying a light source at this position in future images, given a mounting position of a camera, driving conditions, and so on. Such positions are usually peripheral positions with respect to the camera's field of view. Processing of such portions of the image is not required.

With respect to the statistical analysis shown in Figure 3, Figure 4 shows the configuration of regions of interest that are defined for the image plane 40. Aside from the regions 46a, 46b which can be ignored, regions of interest at two significance levels are identified - a region 48 of higher significance, representing a higher likelihood of the presence of a light source, which are to be assessed at higher resolution, and a region 47 of lower significance, representing a lower likelihood of the presence of a light source, which are to be assessed at lower resolution.

The image pyramid 21 is again advantageous in readily enabling assessment of different types of region of interest, since the different levels of image resolution are already present in the pyramid 21. For example, the 'base' level, or maximum resolution level of the pyramid 21 is assessed for the region of interest 48 having highest likelihood, and a level which is higher is assessed for the region of interest 47 having lower likelihood. The higher level is, in embodiments, no higher than the penultimate level of the pyramid 21, so as to allow pixel values of an even higher level of the pyramid 21 to be used in calculation of the thresholds in the manner of expression (1). The term 'assessed', as used herein, refers to the pixels which are to be thresholded, and the pixel values to be used in the calculation of the corresponding threshold value.

In this way, it is ensured that distant light spots are not ignored, and larger light spots are not fragmented due to noise or artefacts within the light source.

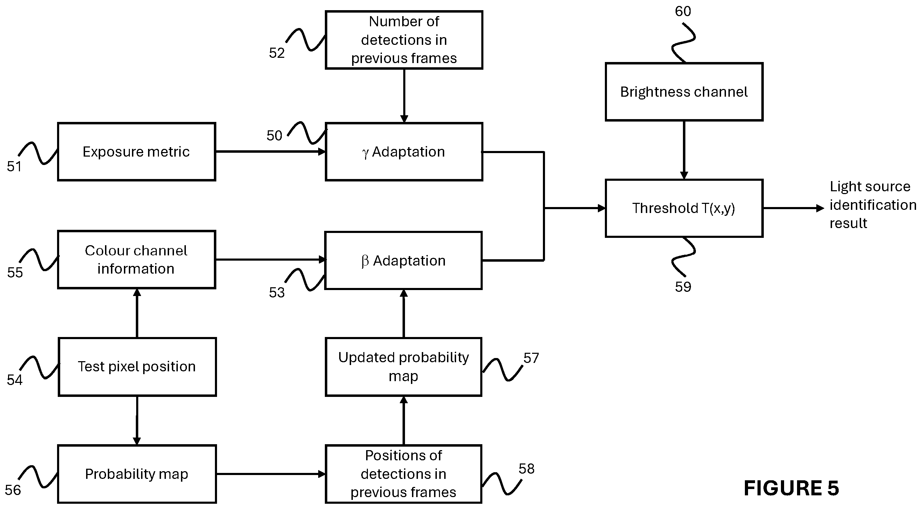

Figure 5 illustrates the relationship between factors which may be considered for dynamic calculation and adaptation of $\beta$ and $\gamma$, in embodiments of the present disclosure. Any individual or combination of the factors described may be employed in the first embodiment.

$\gamma$ adaptation 50 is dependent on at least one of an exposure metric 51, and the number of detections in previous frames 52.

As set out above, if an image is bright, due to high exposure, an exposure metric 51 increases, which causes $\gamma$ to increase, which in turn increases T(x,y). The exposure metric 51 may be one of:

(a) dynamic range (difference between maximum intensity and minimum intensity) at the base level of the image pyramid;

(b) difference between the 95th percentile and the 5th percentile of the brightness information of the y-channel of an image captured in the YUV colour space;

(c) contrast as obtained from an image histogram;

(d) average luminance; and

(e) mean intensity or median intensity.

If $\gamma$ is dependent on the number of detections in previous frames 52, the sensitivity to new detections can configured accordingly. For example, on a quiet road in which few vehicle lights have been identified, it can be inferred that few vehicle lights are likely to be identified in the short term future. A higher $\gamma$, and therefore a higher threshold can be used on the basis that detected bright spots are less likely to correspond to vehicle lights and more likely to correspond to lane markings or other bright sources. On a busy road in which a large number of historical identifications of light sources has occurred, a lower $\gamma$ can be used to reduce the possibility that vehicle lights are missed.

$\beta$ adaptation 53 is dependent on at least one of colour channel information 55, and a probability map 56 of vehicle light likelihood, each of which is dependent on test pixel position 54, such that $\beta$ is a local parameter.

In the event that $\beta$ is dependent on vehicle light likelihood 56, statistical likelihood of vehicle lights, such as that shown in Figure 3, is compared with a statistical likelihood for non-vehicle lights, and from this, a joint probability can be derived for each image position that a positive identification of a light source is in fact a vehicle light identification, rather than some other light source. In particular, using the Bayes' theorem, based on the expression $P_{x,y}(A|B) = P_{x,y}(A \cap B) / P_{x,y}(B)$, $P_{x,y}(A)$ represents the probability that a vehicle light is present at a given pixel (x,y) in the dataset, $P_{x,y}(B)$ represents the probability that a vehicle light is detected by the detector at a pixel (x,y) in the given dataset, $P_{x,y}(A \cap B)$ represents the probability that a vehicle light is both present and detected at a given pixel (x,y) in the dataset, and $P_{x,y}(A|B)$ represents the probability that a detection is a vehicle light (true positive).

The joint probability map is normalized and has a value between 0 and 1 for a particular grid of pixels for which the joint probability value, and consequently, $\beta$, is calculated. $\beta$ values at pixels in the grid are calculated using expression (2) below:

$$\beta = \beta^{max} - (\beta^{max} - \beta^{min}) * \text{p\_grid} \qquad \text{Expression (2)}$$

in which $\beta^{max}$ and $\beta^{min}$ are values defined as constants for a specific dataset, and p_grid are the joint probability values in a given pixel grid for a region of interest. $\beta$ is thus calculated based on (a) the region of interest of the pixel under consideration, for which $\beta^{max}$ and $\beta^{min}$ are set, (b) colour properties of the pixel under consideration, and (c) the position of the pixel within the region of interest, factors (b) and (c) affecting the associated joint probability, derived from p_grid, that a pixel is both a vehicle light source, and is detected. For large joint probability values, $\beta$ tends towards $\beta^{min}$, whereas for low joint probability values, $\beta$ tends towards $\beta^{max}$. $\beta^{max}$ and $\beta^{min}$ may be determined from the data set, based on a desired range of values for $\beta$ for a particular region of interest, which may in turn be based on the significance level of the region of interest as a whole, but can also be set empirically by a user, as part of a calibration process.

Such a calculation of $\beta$ enables more relaxed detection in regions of high true positives, and stricter detection in regions of high false positives.

In some embodiments, the probability map is updated 57 using information relating to the positions of detections 58 in previous frames, and lane information, from which the positions of bright artefacts such as lane markings and road signs can be determined.

In some embodiments, the probability map is updated based on a probability map of false negatives, or a probability map of lane markings.

In embodiments, $\beta$ can be varied in dependence upon colour properties of the pixel under consideration. In embodiments in which compressed images are received from an image-capture source in YUV colour space, $\beta$ can be varied in dependence on U-channel and V-channel information. This is particularly useful since some vehicle lights may have relatively low Y-channel (luminance or brightness) values, such as red taillights, and blueish-white headlights, such that consideration of brightness values may not be sufficient to enable such light sources to be identified. For example, such light sources are often faint in comparison to other bright regions in an image which have a similar grey values, such as brighter yellow headlights, or red-reflecting taillights. In alternative embodiments, compressed images are received from an image-capture source in RGB colour space, and $\beta$ can be varied in dependence on red and blue channel information.

The V-channel represents the chrominance related to the blue-yellow axis, which is information relating to the difference between the luminance and the red colour component. The U-channel represents the chrominance related to the red-yellow axis, which is information relating to the difference between the luminance and the blue colour component. The colour characteristic of each pixel, given by the U and V channel values, is compared to the colour characteristic of red taillights and blueish-white headlights to determine the probability of a vehicle light matching either category. $\beta$ is reduced based on the determined probability, in order to relax the threshold in cases in which a pixel having faint Y-channel information should in fact be identified as a light source.

**The** output of the $\gamma$ adaptation and the $\beta$ adaptation are fed into the threshold calculation 59 associated with step S12 of method 10. Brightness channel information 60 is compared with the calculated thresholds in the manner described above.

The embodiments described above provide an advantageous technique of image thresholding for light source detection, which can be performed on a compressed image, obtained from any image capture source. The technique is such that scene brightness information can be derived using modified gamma correction, such that light source detection can be performed accurately. The modified gamma correction is such that high contrast can be used in dark image regions, and low contrast can be used in high illuminated image regions. The threshold formula takes into account one or more of the position of a test pixel, colour properties of the pixel, an exposure metric, and the number of detections in the previous frames, while the use image pyramid enables pixel neighbourhood mapping, and consideration of regions of interest improves efficiency of processing.

The embodiments described are able to detect close to every vehicle light source, with low computational complexity, low false positive rates, requiring only minimal image resolution (such as an 8-bit image). The technique is readily adaptable to different camera settings which use tone mapping and which generate image pyramids.

The method of the first embodiment is implemented by any suitable processing system which can execute computer instructions for performing the required functions. Each of the steps illustrated in Figure 1 represents a functional portion of a computer program executed by one or more processors or controllers, according to a second embodiment. The computer program is stored in non-volatile memory of an apparatus containing the one or more processors or controllers. Such apparatus forms a third embodiment. The program may be downloaded from a server and installed for operation, with a user interface enabling particular parameters or optimisations to be controlled. For example, parameters such as $\beta^{max}$ and $\beta^{min}$, and the region of interest probability thresholds, may be input by a user, and the selection of inputs to $\gamma$ and $\beta$ adaptation may also be controlled by the user.

The embodiments described above make reference to identification of vehicle lights, and the apparatus of the third embodiment is included in an automotive controller in a fourth embodiment. The term 'automotive controller' is to be interpreted broadly as encompassing any control system for use in an automotive context, and such an automotive controller may form part of an existing electronic control unit to which the controller of the third embodiment is added, or form a standalone electronic control unit to interface with a central or domain controller of the vehicle. In a fifth embodiment, the automotive controller further comprises a camera system comprising one or more cameras for capturing an image in which a light source is to be detected.

In modifications to the first, second and third embodiments, light sources other than vehicle light sources can be detected identified, with parameters relevant to the nature of the application of the light source identification technique being used in $\beta$ and $\gamma$ identification. As an example, terrestrial light sources mounted to buildings may be identified in some embodiments in order to facilitate drone navigation, and altitude information may be used to control the way in which $\beta$ and $\gamma$ are adapted.

In further modifications to the first, second and third embodiments, step S11 in which regions of interest are identified may be omitted, such that the full image is processed. This may be appropriate in situations in which light source positions might not be expected to be constrained by real-world factors, such as the road direction, such that there is no *a priori* knowledge which can inform the light source identification method. In further modifications in which regions of interest are identified, this step does not need to be based on statistical analysis of a dataset, and may instead be based on a predetermined fixed layout, appropriate to a particular light source identification context.

The light source identification method may be performed continuously, on a frame-by-frame basis when receiving frames of a video or moving image sequence, in order to enable substantially real-time information relating to the light source identification result to be output to a user. This is particularly advantageous in driving scenarios where prompt reactions are required.

## Claims

1. A computer-implemented method of identifying a light source in an image, comprising:

   receiving an image pyramid representing a tone-mapped image by a reference pixel array of low resolution, and by one or more test pixel arrays of higher resolution than the reference pixel array;
   comparing pixel values of test pixels in the image with respective brightness thresholds, wherein a light source is identified at a position at which a test pixel value exceeds a respective brightness threshold;
   wherein for each test pixel, the method comprises defining the respective brightness threshold as a non-linear function of a pixel value of a reference pixel in the reference pixel array which has an area in the image which includes the position of the test pixel and which has a pixel value which is the mean pixel value of the test pixels in the area in the image of the reference pixel,
   wherein the non-linear function is of the form $T(x,y) = A * (I''(x,y)/A)^\gamma + \beta$, for threshold value $T$ at test pixel image position $(x,y)$, reference pixel value $I''(x,y)$, maximum pixel value $A$, gamma correction coefficient $\gamma$, and linear offset $\beta$.

2. A method according to claim 1, further comprising:

   identifying one or more regions of interest in the one or more test pixel arrays at which light sources are likelier to be present than a minimum probability threshold, wherein and
   comparing pixel values comprises comparing pixel values of test pixels in the one or more regions of interest with respective brightness thresholds.

3. A method according to claim 2, comprising identifying the one or more regions of interest using statistical analysis of a training dataset comprising information identifying one or more light sources in one or more historical images.

4. A method according to claim 2 or claim 3, comprising classifying the regions of interest into at least two levels of likelihood of presence of a light source;
   wherein, for a region of interest of a higher likelihood level, the method comprises comparing the pixel values of a higher resolution test pixel array with respective thresholds, and for a region of interest of a lower likelihood level, the method comprises comparing the test pixel values of a lower resolution test array with respective thresholds.

5. A method according to claim 4, wherein $\beta$ is a function of colour information of the test pixel, and the colour information is chrominance information, wherein the function of the chrominance information is dependent upon the colour of a light source to be detected.

6. A method according to claim 4 or claim 5, wherein $\beta$ is a function of likelihood level of the region of interest of the test pixel, and the likelihood is the probability that a detection is a light source.

7. A method according to any one of claims 1 to 6, wherein $\gamma$ is a function of at least one of:

   exposure of the image; and
   identification of one or more light sources in historical images.

8. A method according to any one of the preceding claims, wherein the light source is a vehicle light source.

9. A computer program which, when executed by one or more processors, is arranged to cause the method of any one of claims 1 to 8 to be performed.

10. An apparatus comprising one or more processors arranged to execute the computer program of claim 9.

11. An automotive controller comprising the apparatus according to claim 10.

12. A system comprising the automotive controller of claim 11 and one or more cameras for capturing an image and generating the image pyramid from the captured image.

**Patentansprüche**

1. Computerimplementiertes Verfahren zum Identifizieren einer Lichtquelle in einem Bild, umfassend:

   Empfangen einer Bildpyramide, die eine Tonwertabbildung darstellt, durch ein Referenz-Pixel-Array mit niedriger Auflösung und durch ein oder mehrere Test-Pixel-Arrays mit höherer Auflösung als das Referenz-Pixel-Array;
   Vergleichen von Pixelwerten von Testpixeln in dem Bild mit entsprechenden Helligkeits-Schwellenwerten, wobei eine Lichtquelle an einer Position identifiziert wird, an der ein Test-Pixelwert einen entsprechenden Helligkeits-Schwellenwert überschreitet;
   wobei das Verfahren für jedes Testpixel das Definieren des entsprechenden Helligkeits-Schwellenwerts als nichtlineare Funktion eines Pixelwerts eines Referenz-Pixels in dem Referenz-Pixel-Array umfasst, das einen Bereich im Bild aufweist, der die Position des Testpixels einschließt und einen Pixelwert aufweist, der der mittlere Pixelwert der Testpixel in dem Bereich im Bild des Referenz-Pixels ist,
   wobei die nichtlineare Funktion die Form $T(x,y) = A * (I''(x,y) / A)^\gamma + \beta$ hat, für den Schwellenwert T an der Testpixel-Bildposition (x,y), den Referenz-Pixelwert $I''(x,y)$, den maximalen Pixelwert A, den Gammakorrektur-Koeffizienten $\gamma$ und den linearen Versatz $\beta$.

2. Verfahren nach Anspruch 1, ferner umfassend:

   Identifizieren eines oder mehrerer Bereiche von Interesse in dem einen oder den mehreren Test-Pixel-Arrays, in denen Lichtquellen wahrscheinlicher vorhanden sind als ein Mindestwahrscheinlichkeits-Schwellenwert, wobei das Vergleichen von Pixelwerten das Vergleichen von Pixelwerten von Testpixeln in dem einen oder den mehreren Bereichen von Interesse mit entsprechenden Helligkeits-Schwellenwerten umfasst.

3. Verfahren nach Anspruch 2, umfassend das Identifizieren des einen oder der mehreren Bereiche von Interesse unter Verwendung einer statistischen Analyse eines Trainings-Datensatzes, der Informationen umfasst, die eine oder mehrere Lichtquellen in einem oder mehreren historischen Bildern identifizieren.

4. Verfahren nach Anspruch 2 oder Anspruch 3, umfassend das Unterteilen der Bereiche von Interesse in mindestens zwei Wahrscheinlichkeitsstufen für das Vorhandensein einer Lichtquelle;
   wobei das Verfahren für einen Bereich von Interesse mit einer höheren Wahrscheinlichkeitsstufe das Vergleichen der Pixelwerte eines Test-Pixel-Arrays mit höherer Auflösung mit entsprechenden Schwellenwerten umfasst, und für einen Bereich von Interesse mit einer niedrigeren Wahrscheinlichkeitsstufe das Verfahren das Vergleichen der Test-Pixelwerte eines Test-Arrays mit niedrigerer Auflösung mit entsprechenden Schwellenwerten umfasst.

5. Verfahren nach Anspruch 4, wobei $\beta$ eine Funktion der Farbinformation des Testpixels ist und die Farbinformation eine Chrominanzinformation ist, wobei die Funktion der Chrominanzinformation von der Farbe einer zu erfassenden Lichtquelle abhängt.

6. Verfahren nach Anspruch 4 oder Anspruch 5, wobei $\beta$ eine Funktion der Wahrscheinlichkeitsebene des Bereichs von Interesse des Testpixels ist und die Wahrscheinlichkeit die Wahrscheinlichkeit ist, dass eine Erkennung eine Lichtquelle ist.

7. Verfahren nach einem der Ansprüche 1 bis 6, wobei $\gamma$ eine Funktion aus mindestens dem Folgenden ist:

   Belichtung des Bildes; und
   Identifizierung einer oder mehrerer Lichtquellen in historischen Bildern.

8. Verfahren nach einem der vorstehenden Ansprüche, wobei die Lichtquelle eine Fahrzeug-Lichtquelle ist.

9. Computerprogramm, das, wenn es von einem oder mehreren Prozessoren ausgeführt wird, so angeordnet ist, dass es das Verfahren nach einem der Ansprüche 1 bis 8 ausführt.

10. Vorrichtung, umfassend einen oder mehrere Prozessoren, die so angeordnet sind, dass sie das Computerprogramm nach Anspruch 9 ausführen.

**11.** Fahrzeugsteuergerät, umfassend die Vorrichtung nach Anspruch 10.

**12.** System, umfassend das Fahrzeugsteuergerät nach Anspruch 11 und eine oder mehrere Kameras zum Aufnehmen eines Bildes und Erzeugen der Bildpyramide aus dem aufgenommenen Bild.

**Revendications**

**1.** Procédé mis en œuvre par ordinateur d'identification d'une source lumineuse dans une image, comprenant :

la réception d'une pyramide d'images représentant une image à mappage de tons par un réseau de pixels de référence de faible résolution et par un ou plusieurs réseaux de pixels de test de résolution supérieure à celle du réseau de pixels de référence ;
la comparaison des valeurs de pixel des pixels de test dans l'image avec des seuils de luminosité respectifs, dans lequel une source lumineuse est identifiée à une position à laquelle une valeur de pixel de test dépasse un seuil de luminosité respectif ;
dans lequel, pour chaque pixel test, le procédé comprend la définition du seuil de luminosité respectif comme une fonction non linéaire d'une valeur de pixel d'un pixel de référence dans le réseau de pixels de référence qui présente une zone dans l'image qui comporte la position du pixel de test et qui a une valeur de pixel qui est la valeur de pixel moyenne des pixels de test dans la zone dans l'image du pixel de référence,
dans lequel la fonction non linéaire est de la forme $T(x,y) = A * (I"(x,y)/A)^{\gamma} + \beta$, pour la valeur de seuil T à la position d'image de pixel de test $(x,y)$, la valeur de pixel de référence $I"(x,y)$, la valeur de pixel maximale A, le coefficient de correction gamma $\gamma$ et le décalage linéaire $\beta$.

**2.** Procédé selon la revendication 1 comprenant en outre :

l'identification d'une ou plusieurs régions dignes d'intérêt dans le ou les réseaux de pixels de test au niveau desquels des sources lumineuses sont plus susceptibles d'être présentes qu'un seuil de probabilité minimum, et dans lequel
la comparaison de valeurs de pixel comprend la comparaison des valeurs de pixels des pixels de test dans la ou les régions dignes d'intérêt avec des seuils de luminosité respectifs.

**3.** Procédé selon la revendication 2, comprenant l'identification de la ou des régions dignes d'intérêt à l'aide de l'analyse statistique d'un ensemble de données d'apprentissage comprenant des informations identifiant une ou plusieurs sources lumineuses dans une ou plusieurs images historiques.

**4.** Procédé selon la revendication 2 ou la revendication 3, comprenant la classification des régions dignes d'intérêt en au moins deux niveaux de vraisemblance de présence d'une source lumineuse ;
dans lequel, pour une région digne d'intérêt d'un niveau de vraisemblance supérieur, le procédé comprend la comparaison des valeurs de pixel d'un réseau de pixels de test de résolution supérieure avec des seuils respectifs et pour une région digne d'intérêt d'un niveau de vraisemblance inférieur, le procédé comprend la comparaison des valeurs de pixels de test d'un réseau de tests de résolution inférieure avec des seuils respectifs.

**5.** Procédé selon la revendication 4, dans lequel $\beta$ est une fonction d'une information de couleur du pixel de test et l'information de couleur est une information de chrominance, dans lequel la fonction de l'information de chrominance dépend de la couleur d'une source lumineuse à détecter.

**6.** Procédé selon la revendication 4 ou la revendication 5, dans lequel $\beta$ est une fonction du niveau de vraisemblance de la région digne d'intérêt du pixel de test et la vraisemblance est la probabilité qu'une détection soit une source lumineuse.

**7.** Procédé selon l'une quelconque des revendications 1 à 6, dans lequel $\gamma$ est une fonction d'au moins un élément parmi :

l'exposition de l'image ; et
l'identification d'une ou plusieurs sources lumineuses dans des images historiques.

**8.** Procédé selon l'une quelconque des revendications précédentes, dans lequel la source lumineuse est une source lumineuse de véhicule.

9. Programme informatique qui, lorsqu'il est exécuté par un ou plusieurs processeurs, est agencé pour amener la réalisation du procédé selon l'une quelconque des revendications 1 à 8 à effectuer.

10. Appareil comprenant un ou plusieurs processeurs agencés pour exécuter le programme informatique selon la revendication 9.

11. Dispositif de commande d'automobile comprenant l'appareil selon la revendication 10.

12. Système comprenant le dispositif de commande automobile selon la revendication 11 et une ou plusieurs caméras destinées à capturer une image et à générer la pyramide d'images à partir de l'image capturée.

**FIGURE 1**

FIGURE 2

FIGURE 3

FIGURE 4

**FIGURE 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHOI YEONGYU et al.** Efficient local adaptive thresholding for night-time vehicle candidate detection. *International Journal or Computational Vision and Robotics*